Europäisches Patentamt

European Patent Office

Office européen des brevets

(11) Veröffentlichungsnummer: **0 277 180 B1**

(12) **EUROPÄISCHE PATENTSCHRIFT**

(45) Veröffentlichungstag der Patentschrift: **07.10.92**

(21) Anmeldenummer: **87905167.0**

(22) Anmeldetag: **18.08.87**

(86) Internationale Anmeldenummer:
**PCT/CH87/00104**

(87) Internationale Veröffentlichungsnummer:
**WO 88/01139 (25.02.88 88/05)**

(51) Int. Cl.⁵: **A23L 2/04**, A23N 1/02

(54) **VERFAHREN ZUR BEHANDLUNG VON FRÜCHTEN UND GEMÜSEN, INSBESONDERE ZUR SAFTGEWINNUNG, UND ANLAGE ZUR DURCHFÜHRUNG DES VERFAHRENS.**

(30) Priorität: **19.08.86 CH 3306/86**

(43) Veröffentlichungstag der Anmeldung:
**10.08.88 Patentblatt 88/32**

(45) Bekanntmachung des Hinweises auf die Patenterteilung:
**07.10.92 Patentblatt 92/41**

(84) Benannte Vertragsstaaten:
**AT CH DE FR IT LI**

(56) Entgegenhaltungen:
**DE-A- 2 632 045      DE-B- 1 240 379**
**FR-A- 2 166 489      FR-A- 2 296 012**
**GB-A- 570 866        GB-A- 2 163 062**
**US-A- 2 389 862**

**Food Technology. vol. 83, no. 12, December 1984, (Chicago, Illinois, US) D.J. Paulson et al. : "Crossflow membrane technology and its applications", pages 77-87**

**Handbuch der Lebensmitteltechnologie : U. Schobinger, Frucht- und Gemüsesäfte, 1987, Seiten 112, 131, 132, Verlag Eugen Ulmer**

(73) Patentinhaber: **BUCHER-GUYER AG Maschinenfabrik**

**CH-8166 Niederweningen/Zürich(CH)**

(72) Erfinder: **GRESCH, Walter**
**Boletstrasse 390**
**CH-8166 Niederweningen(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft ein Verfahren zur Behandlung von Früchten und Gemüsen gemäss dem Oberbegriff des Patentanspruches 1.

Durch die japanische Patentschrift Nr. 59-35580 ist es bereits bekannt, die in einem Behälter befindlichen Maische durch enzymatischen Zellaufschluss zu behandeln. Die zerkleinerten Früchte werden zusammen mit den hinzugefügten Enzymen, z.B. Cellulase, Pektinase, mit Hilfe eines Rührwerks vermischt und durch den enzymatischen Zellaufschluss verflüssigt. Das dadurch erhaltene Flüssigkeitsgemisch durchläuft eine Passier-Maschine und wird an eine Sterilisiereinrichtung zur Deaktivierung der Enzyme weitergeleitet. Danach wird der Rohsaft einer Ultrafiltrationseinrichtung zugeführt und geklärt.

Der Nachteil dieses Verfahrens besteht darin, dass durch den Zellaufschluss mit Hilfe von Enzymen geschmackliche Veränderungen im Saft auftreten. Die meisten Gesetzgeber verbieten deshalb auch den enzymatischen Zellaufschluss, um die Naturbelassenheit des Saftes nicht zu gefährden. Hinzu kommt noch, dass durch den Verbrauch der relativ teuren Enzyme die Betriebskosten der Anlage sehr hoch sind. Ferner wird für die enzymatische Verlüssigung relativ viel Tankvolumen benötigt, welches viel Platz beansprucht.

Bei einem bekannten Verfahren zur Aufbereitung von Trauben, möglicherweise auch für die Weinbereitung, und von Saft aus Beerenfrüchten nach der FR-A-2296012, werden die Früchte vorerst zerquetscht und danach die festen Teile durch Zentrifugieren und/oder Filtrieren ausgeschieden und einer Auspressung unterzogen, während der vorentsaftete Rohsaft weiterbehandelt wird.

Der Erfindung liegt deshalb die Aufgabe zugrunde, ein Verfahren und eine dazugehörige Anlage zu schaffen, die ohne Vorentsaftung des Rohmaterials zur Qualitätsverbesserung und Kostensenkung bei der Gewinnung klarer Säfte beitragen.

Gemäss der Erfindung wird diese Aufgabe dadurch gelöst, dass das Rohmaterial zuerst zerkleinert und von den festen Bestandteilen, wie Stielen, Kernen und Schalenteilen getrennt wird, anschliessend ganz oder teilweise durch physikalischen Zellaufschluss verflüssigt und der Rohsaft darauffolgend oder gleichzeitig mit dem Zellaufschluss durch Membranfiltration geklärt wird.

Zweckmässigerweise erfolgt die Klärung des Rohsaftes durch Membranfiltration, vorzugsweise Ultra- oder Mikrofiltration. In schwierigen Fällen ist eine zweistufige Filtration zweckmässig. Dabei wird für die erste Stufe mit Vorteil eine tangential angeströmte Grob- oder Mikrofiltration eingesetzt, welche bei höheren Drücken, z.B. über 20 bar arbeitet. Das Permeat der ersten Stufe wird der zweiten Stufe (<10 bar) zugeführt, welche zweckmässigerweise aus einer normalen Ultra- oder Mikrofiltration besteht.

Nach einem wesentlichen Merkmal der Erfindung kann das Rohmaterial aus ganzen Früchten bestehen.

Die Anlage zur Durchführung des Verfahrens zeichnet sich dadurch aus, dass sie aus einer Zerkleinerungseinrichtung, z.B. einer Mühle zum Zerkleinern des Rohmaterials, einer der Zerkleinerungseinrichtung nachgeschalteten oder integrierten Siebeinrichtung zum Abtrennen der Stiele, Kerne und Schalenteile etc., einer anschliessenden Einrichtung für den physikalischen Zellaufschluss und einer Membran-Filtrationseinrichtung besteht.

Anstelle einer Mühle lassen sich die ganzen Früchte aber nach einem Durchgang durch eine Blanchiermaschine in einer Passiermaschine, welche gleichzeitig als Siebeinrichtung benutzt wird, zerkleinern.

Zur rationelleren Verwertung des Rohmaterials und zur Verbesserung der Ausbeute ist der Siebeinrichtung eine Recycling-Presse zugeordnet, durch die die abgetrennten Stiele, Kerne und Schalenteile etc. entsaftet werden.

Um die Ausbeute der Anlage zu erhöhen und zur Entsorgung des von der Filtrationseinrichtung anfallenden Retentates kann letzteres ebenfalls der Recycling-Presse zugeführt werden. Die Anordnung der Recycling-Presse erlaubt es, bei hoher Gesamtausbeute, die Membranfiltrations-Anlage bei nur mässiger Ausbeute zu fahren, was zu grossen Kosteneinsparungen führt.

Zur Vermeidung der Nachtrübung des Saftes, insbesondere durch kolloidalgelöste Teile, Makromoleküle, z.B. Polyphenole, und zur Verbesserung der Filtrationsfähigkeit des Retentates ist zwischen der Filtrationseinrichtung und der Recycling-Presse eine Vorbehandlungsstufe vorgesehen, in der das Retentat mit bekannten Schönungsmitteln und im allgemeinen geringen Mengen von Enzymen behandelt wird, bevor es der Recycling-Presse zugeführt wird.

Zwecks einfacher Weiterverarbeitung wird der durch die Recycling-Presse gewonnene Rohsaft über eine Zuführleitung unmittelbar nach der Siebeinrichtung wieder in den Prozessablauf zurückgeführt.

Zur Reduktion der Viskosität des zerkleinerten Rohmaterials und damit zur Verbesserung der Filtrierleistung und daneben je nach Aufschluss-Verfahren auch zur Beschleunigung des physikalischen Zellaufschlusses, kann zwischen der Siebeinrichtung und der Einrichtung für den physikalischen Zellaufschluss eine Behandlungsstufe mit in der Praxis zugelassenen pektolytischen Enzymen vorgesehen werden. Die Enzymbehandlung ist auch nach dem physikalischen Zellaufschluss möglich, wenn nur eine Verbesserung der Filtrierleistung beabsichtigt ist. In schwierigen Fällen ist hier zusätzlich zum physikalischen Zellaufschluss auch ein dem physikalischen Aufschluss unterstützender enzymatischer Zellaufschluss durch Zugabe von Cellulase-Enzymen möglich.

Nach einem weitren Verfahrensmerkmal der Erfindung erfolgt der physikalische Zellaufschluss durch die mechanische Einwirkung von hohen Scherkräften, Prall und Stoss, wechselndem Druck und Entspannung, Ultraschall sowie Kavitation auf die Zellen.

In einem bevorzugten Ausführungsbeispiel der Erfindung besteht die Einrichtung für den physikalischen Zellaufschluss aus einem Hochdruck-Homogenisator und/oder einer Kolloidmühle.

Der Effekt des physikalischen Zellaufschlusses kann dadurch verbessert werden, dass die Düse des Druck-Homogenisators aus einer oder mehreren, hintereinander angeordneten Bearbeitungskammern für das Rohmaterial besteht, denen ein Difusor zwecks Energie-Rückgewinnung vorgeschaltet ist.

In einer anderen Ausführungsform der Erfindung kann die Einrichtung für den physikalischen Zellaufschluss aus einer elektrischen Wechselfeld-Anlage bestehen.

Ein vorteilhaftes Verfahrensmerkmal der Erfindung ist dadurch gekennzeichnet, dass die elektrische Wechselfeld-Anlage der mechanisch arbeitenden Zellaufschluss-Einrichtung vorgeschaltet ist, um dadurch den Effekt des physikalischen Zellaufschlusses noch weiter zu erhöhen.

Nach einem weiteren, vorteilhaften Merkmal der Erfindung ist die Einrichtung für den physikalischen Zellaufschluss in die Filtrationseinrichtung integriert.

Vorzugsweise ist die Einrichtung für den physikalischen Zellaufschluss in einem oder mehreren der vorhandenen Kreisläufe der Filtrationseinrichtung in Serie oder parallel dazu angeordnet.

Bei einer batchweisen oder halbkontinuierlich arbeitenden Membranfiltrationseinrichtung ist die Einrichtung für den physikalischen Zellaufschluss in einem Kreislauf angeordnet, der aus einem Tank, einer Zuführleitung und einer Rückleitung besteht. Dabei ist die Einrichtung in diesem Kreislauf nach einer Zuführpumpe angeordnet. Sie kann aber auch im Umwälzkreislauf der Ultra- oder Mikrofiltrationseinrichtung vor oder nach der Umwalzpumpe angeordnet sein. Wegen der grossen Durchflussmenge ist bei Anordnung in der Umwälzleitung eine Schaltung parallel zur Umwälzleitung zweckmässig.

Bei vollkontinuierlich und mehrstufig arbeitenden Membranfiltrationseinrichtungen ist wegen der grossen Durchflussmenge in der ersten Stufe die Einrichtung für den physikalischen Zellaufschluss mindestens in der ersten Stufe, ebenfalls parallel in den Kreislauf dieser Stufe geschaltet.

Eine besonders zweckmässige Kombination von physikalischem Zellaufschluss und Membranfiltration wird dadurch erreicht, dass die elektrische Wechselfeld-Anlage in ein Filtrations-Modul der vorzugsweise als Ultra- oder Mikrofiltrationseinrichtung ausgeführten Filtrationseinrichtung integriert ist. Dabei ist die eine Elektrode der elektrischen Wechselfeld-Anlage auf der Retentatseite und die zweite Elektrode oder weitere Elektroden mit einem gemeinsamen elektrischen Anschluss auf der Permeatseite des Filtrations-Moduls angeordnet. Das Filtrations-Modul kann als Rohr-Modul oder Platten-Modul ausgeführt sein.

Bei Verwendung eines als Rohr-Modul ausgebildeten Filtrations-Moduls ist nach einem vorteilhaften Merkmal der Erfindung in einem Membranfilterrohr des Rohr-Moduls eine innere Elektrode angeordnet, wobei die zweite Elektrode durch das nach aussen isolierte, äussere Hüllrohr des Rohr-Moduls gebildet wird.

Nach einem weiteren Merkmal der Erfindung ist die Einrichtung für den physikalischen Zellaufschluss in die Umwälzpumpe oder Zuführpumpe der Membranfiltrationseinrichtung integriert. Hierzu ist am Umfang eines rotierenden Schaufelrades der Umwälzpumpe anschliessend an die Pumpen-Schaufeln ein Zahnkranz mit Kanten und Lücken angeordnet, die mit feststehenden Gegenkanten eines mit dem Pumpengehäuse fest verbundenen Stators zusammenarbeiten und den Zellaufschluss bewirken. Die Umwälzpumpe übernimmt somit neben der Aufgabe der Förderung auch die Aufgabe des Zellaufschlusses.

Die mit der Erfindung erzielten Vorteile bestehen insbesondere darin, dass durch den physikalischen Zellaufschluss die bei herkömmlichen Verfahren infolge der Verwendung von zellaufschliessenden Enzymen auftretenden Geschmacksveränderungen vermieden werden und die Saftqualität wesentlich verbessert wird. Die relativ hohen Kosten für den Verbrauch von Enzymen können eingespart und die Ausbeute verbessert werden. Ausserdem ist gegenüber dem enzymatischen Zellaufschluss eine Verringerung des Tankvolumens gegeben. Dadurch verringert sich die Durchlaufzeit, was eine zusätzliche Verbesserung der Saftqualität mit sich bringt. Dies alles führt zu niedrigen Betriebskosten bei einem günstigen Preis/Leistungs-Verhältnis der Gesamtanlage. Durch die erfindungsgemässe Integration der Einrichtung für den physikalischen Zellaufschluss in die Membranfiltrationseinrichtung lassen sich die vorhandenen Kreisläufe dafür nutzen, um den Zellaufschluss zu vereinfachen und zu verbilligen. Der Energieaufwand wird verringert, weil der Zellaufschluss nicht in einem Durchgang erforderlich ist und somit beispielsweise der Druck-Homogenisator mit geringerem Druck betrieben werden kann. Ausserdem wird die Baugrösse der Anlage und damit der Platzbedarf verringert.

Die Erfindung ist in der folgenden Beschreibung und der Zeichnung, die mehrere Ausführungsbeispiele darstellt, näher erläutert. Es zeigen:

Fig. 1    eine schematische Darstellung der Gesamtanlage,

Fig. 2    ein Ausführungsbeispiel zur Integration der Einrichtung für den physikalischen Zellaufschluss in eine batchweise oder halbkontinuierlich arbeitende Membranfiltrationseinrichtung,

Fig. 3    ein weiteres Ausführungsbeispiel zur Integration der Einrichtung für den physikalischen Zellaufschluss in eine vollkontinuierlich arbeitende, mehrstufige Membranfiltrationseinrichtung,

Fig. 4    ein Ausführungsbeispiel einer für den physikalischen Zellaufschluss optimierten Düse,

Fig. 5    ein Ausführungsbeispiel einer in ein Rohr-Modul integrierten Einrichtung für den physikalischen Zellaufschluss und

Fig. 6    ein weiteres Ausführungsbeispiel einer in die Umwälzpumpe der Membranfiltrationseinrichtung integrierten Einrichtung für den physikalischen Zellaufschluss.

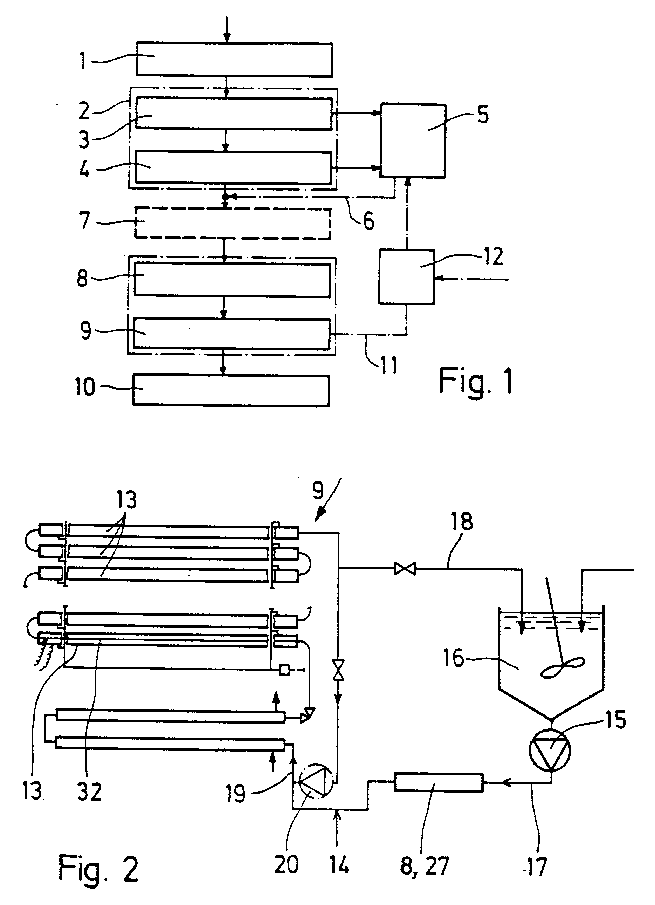

In Fig. 1 ist eine Ausführungsform der erfindungsgemässen Anlage zur Durchführung des Verfahrens schematisch dargestellt. Das zu entsaftende Rohmaterial, das aus ganzen Früchten bestehen kann, wird in einer Mühle 1 zerkleinert und einer Siebeinrichtung 2 zugeführt. Die Siebeinrichtung 2 besteht aus einer ersten, grobsiebigen Trommel 3 und einer zweiten, feinsiebigen Trommel 4. Durch die Siebeinrichtung 2 werden die festen Bestandteile, wie Stiele, Kerne, Schalenteile und dergleichen vom zerkleinerten Rohmaterial abgetrennt und einer der Siebeinrichtung 2 zugeordneten Recycling-Presse 5 zugeführt. Als Recycling-Presse eignet sich am besten eine Horizontal-Presse wegen der guten Filtrierwirkung durch die langen Fliesswege für den Saft. Im Gegensatz zu konventionellen Entsaftungsverfahren genügen hier relativ kleine Pressen. Der durch die Recycling-Presse 5 gewonnene Rohsaft wird über eine Leitung 6 unmittelbar nach der Siebeinrichtung 2 wieder in den Prozessablauf eingeführt. Der in der Recycling-Presse 5 anfallende Trester wird zur weiteren Weiterverwertung abgeführt.

Von der Siebeinrichtung 2 gelangt das zerkleinerte und gesiebte Rohmaterial in eine Behandlungsstufe 7, in der das Rohmaterial einer Enzymierung zwecks Pektin-Abbau ausgesetzt wird. Die obige Enzymierung bewirkt eine Reduktion der Viskosität und damit eine Verbesserung der Filtrierleistung und daneben auch eine Beschleunigung des physikalischen Zellaufschlusses, der in einer sich an die Behandlungsstufe 7 anschliessenden Einrichtung 8 durchgeführt wird. Die Einrichtung 8 besteht aus einem Hochdruck-Homogenisator, der mit einer speziellen Düse bekannter Art zur mechanischen Aufschliessung der Zellen ausgerüstet ist. Das von der Behandlungsstufe 7 kommende Rohmaterial durchströmt dabei unter hohem Druck die Düse des Hochdruck-Homogenisators und wird durch die Einwirkung von Kavitation und Scherkräften in hohem Masse zerkleinert und durch den dabei entstehenden physikalischen Zellaufschluss verflüssigt.

Der durch die Einrichtung 8 erzeugte Rohsaft wird anschliessend einer Filtrationseinrichtung 9 zugeführt und geklärt. Die Filtrationseinrichtung 9 besteht vorzugsweise aus einer Membran- bzw. Ultra- oder Mikrofiltrationseinrichtung. Das erhaltene Permeat gelangt in üblicher Weise zur Konzentrierung und Abfüllung in eine entsprechende Anlage 10. Das Retentat wird zur weiteren Verwertung über eine Leitung 11 der Recycling-Presse 5 zugeführt, durchläuft aber zuvor noch eine Vorbehandlungsstufe 12. Als Vorbehandlungsmittel dienen dabei die bekannten Schönungsmittel, wie z.B. Gelatine. Dadurch werden gewisse Makromoleküle, resp. kolloidal gelöste Teile, die zur Nachtrübung führen oder die Membranfiltration nicht passieren können, aus dem System entfernt. Durch die Verwendung von Enzymen in der Vorbehandlungsstufe 12, z.B. Cellulase-Enzyme zum Aufschluss noch nicht aufgeschlossener Zellen, kann ausserdem die Filtrationsfähigkeit des Retentates verbessert werden. Im Gegensatz zu bekannten Verfahren für enzymatischen Zellaufschluss werden, auf den Gesamtprozess bezogen, nur geringe Mengen Cellulase benötigt. Zudem besteht die Möglichkeit, falls die Qualität den Anforderungen nicht entspricht, diesen Saft einer besonderen Verwertung zuzuführen. Die Saftqualität des Recyclingsaftes lässt sich aber auch verbessern, wenn das Enzym im Retentat nach der Enzymierung wieder durch z.B. Pasteurisierung entaktiviert wird. Auf diese Art und Weise wird vermieden, dass das Enzym auf die Stiele, Kerne, Schalenteile etc. in der Recycling-Presse 5 einwirkt und damit negative Geschmacksveränderungen hervorruft.

Falls der Klarsaft nachträglich konzentriert wird, ist die Saftausbeute mit Hilfe bekannter Extraktionseinrichtungen zur Recycling-Presse 5 noch steigerbar. Zudem erübrigt sich in den meisten Fällen dadurch eine sogenannte Dia-Filtration bei der Membranfiltration, was die durchschnittliche Filtrationsleistung verbessert.

In Fig. 2 ist ein Ausführungsbeispiel der Erfindung dargestellt, bei dem die Filtrationseinrichtung 9 als batchweise oder halbkontinuierlich arbeitende Membran- bzw. Ultra- oder Mikrofiltrationseinrichtung mit mehreren Filtrations-Modulen 13 ausgeführt ist. Die Einrichtung 8 für den physikalischen Zellaufschluss ist bei dieser Ausführung vollständig in die Gesamtanlage der Filtrationseinrichtung 9 integriert. Die Einrichtung 8 ist dabei in einem Kreislauf 14 nach einer Zuführpumpe 15 angeordnet. Der Kreislauf 14 wird durch einen Tank 16, eine Zuführleitung 17 und eine Rückleitung 18 gebildet. Die Einrichtung 8 kann aber auch in einem Umwälzkreislauf 19 vor oder nach einer Umwälzpumpe 20 angeordnet sein.

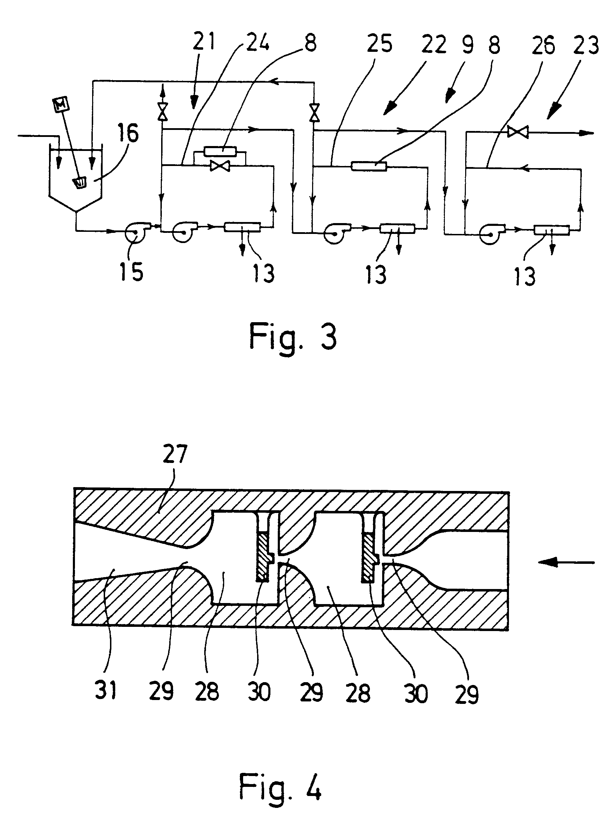

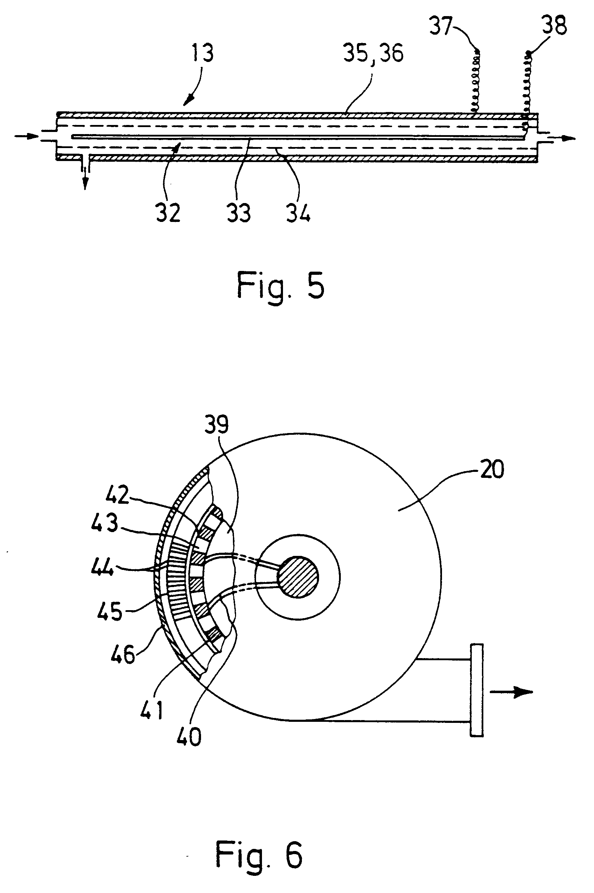

Die Fig. 3 zeigt ein weiteres Ausführungsbeispiel, bei dem die Filtrationseinrichtung 9 als mehrstufige, vollkontinuierlich arbeitende Membran- bzw. Ultra- oder Mikrofiltrationseinrichtung ausgebildet ist. Diese Ausführung weist drei Filtrationsstufen 21, 22 und 23 mit Kreisläufen 24, 25 und 26 auf, in denen die Filtrations-Module 13 angeordnet sind. Die Zuführpumpe 15 ist kombiniert mit einer Einrichtung für physikalischen Zellaufschluss gemäss Fig. 6. Die Maische wird in einem relativ kleinen, der Filtrationsanlage vorgeschalteten Tank 16 mittels z.B einer Scherturbine vorbehandelt. Zur Vervollkommnung des physikalischen Zellaufschlusses wird via einer Rückführleitung ein Retentat-Teilstrom aus den ersten beiden Filtrationsstufen 21, 22 in den Tank 16 zurückgeführt. Im Kreislauf 24 der ersten Filtrationsstufe 21 ist die Einrichtung 8 für den physikalischen Zellaufschluss parallel zum Kreislauf 24 angeordnet. Dadurch wird die in der ersten Filtrationsstufe anfallende, relativ grosse Durchflussmenge reduziert. In der zweiten Filtrationsstufe 22, in der die Durchflussmenge nicht mehr so gross ist, liegt die Einrichtung 8 für den physikalischen Zellaufschluss nicht mehr parallel, sondern in Serie im Kreislauf 25.

Beim Membranfiltrationsverfahren ist allgemein das Verhältnis von Umwälzmenge innerhalb der Ultra- oder Mikrofiltrationseinrichtung zur Zuführmenge sehr gross. Die relativ gross Umwälzmenge ist notwendig, um eine einwandfreie Funktion der Ultra- oder Mikrofiltrationseinrichtung zu gewährleisten. Schaltet man eine Zellaufschluss-Einrichtung in einen der Kreisläufe oder parallel dazu, wie in Fig. 2 und 3 gezeigt, so ist pro Durchgang ein wesentlich geringerer Aufschluss notwendig. Es lassen sich deshalb weniger wirksame und somit einfachere, kostengünstigere und mit weniger Energie arbeitende Einrichtungen einsetzen, ohne dass für die erhöhte Umwälzung zusätzlich, erhöhte Betriebskosten entstehen.

In Fig. 4 ist ein Ausführungsbeispiel der Einrichtung 8 für den physikalischen Zellaufschluss in Form einer für diesen Zweck optimierten Düse 27 eines Druck-Homogenisators dargestellt. Die Düse 27 besteht aus zwei hintereinander angeordneten Bearbeitungskammern 28 für das Rohmaterial. am Anfang und am Ende der Bearbeitungskammern 28 verringert sich der Durchflussquerschnitt der Düse 27 zu einem Düsenmund 29. In den Bearbeitungskammern 28 ist jeweils im Bereich des Düsenmundes 29 eine Prallplatte 30 angeordnet, auf die das Rohmaterial mit hoher Geschwindigkeit auftrifft und durch Kavitation und hohe Scherkräfte zerkleinert und aufgeschlossen wird. Am Ende der zweiten Bearbeitungskammer 28 erweitert sich der Düsenmund 29 zu einem Difusor 31, durch den die kinetische Energie zwecks Einsparung von Energie in einen dem Kreislauf angepassten Druck umgewandelt wird. Die Anwendung dieser Düse ist speziell geeignet für den Einbau in einen Kreislauf der Membranfiltrationsanlage.

Als weitere Einrichtung für den physikalischen Zellaufschluss kann auch eine elektrische Wechselfeld-Anlage bekannter Bauart eingesetzt werden. Eine derartige Anlage besteht beispielsweise aus zwei konzentrischen Elektroden, einer Ring- und einer Zylinder-Elektrode. Zwischen beiden Elektroden wird ein Ringspalt gebildet, durch den das Rohmaterial hindurchgeleitet wird. An beide Elektroden wird eine elektrische Wechselspannung angelegt, unter deren Einwirkung das Rohmaterial im elektrischen Wechselfeld einem physikalischen Zellaufschluss unterzogen wird. Diese Einrichtung eignet sich innerhalb der Anlage gemäss der Erfindung sehr gut zur Vorbehandlung des Rohmaterials vor dem Hauptaufschluss in der Einrichtung 8. Die elektrische Wechselfeld-Anlage kann somit im Ausführungsbeispiel dem Hochdruck-Homogenisator vorgeschaltet sein.

Als in die Membranfiltrations-Anlage integrierte Einrichtungen für den physikalischen Zellaufschluss kommen sowohl dynamische, z.B. Kolloidmühle, als auch statisch arbeitende Aggregate, wie zum Beispiel die Düse 27 gemäss Fig. 4 in Betracht. Durch den Einsatz derartiger Düsen ist es möglich, mit wesentlich geringeren Drücken zu arbeiten, was auch zu niedrigeren Investitionskosten führt. Durch die verwendete Düsenform gemäss Fig. 4 wird die Geschwindigkeits-Energie durch den Difusor 31 zum Teil wieder in Form von Druck-Energie zurückgewonnen. Dadurch wird der Energieverbrauch für den Zellaufschluss weiter herabgesetzt.

Der Fig. 2 ist zu entnehmen, dass bei dieser Ausführung die Filtrations-Module 13 der Membran- bzw. Ultra- oder Mikrofiltrationseinrichtung aus Rohr-Modulen bestehen. Dabei ist in das erste Filtrations-Modul 13 eine elektrische Wechselfeld-Anlage 32 für den physikalischen Zellaufschluss integriert, wie in Fig. 5 näher dargestellt. Eine innere Elektrode 33 der elektrischen Wechselfeld-Anlage 32 befindet sich im Innern eines Membranfilterrohres 34, durch welches das Retentat hindurchgeleitet wird. Ein äusseres Hüllrohr 35 zum Abführen des Permeats bildet die zweite Elektrode 36, die nach aussen isoliert ist. Zwischen den beiden Elektroden 33 und 36 wird über elektrische Anschlüsse 37 und 38 eine Wechselspannung angelegt, die im elektrischen Wechselfeld einen physikalischen Zellaufschluss des zu verarbeitenden Materials bewirkt. Es können auch mehrere, hintereinander oder parallel geschaltete Filtrations-Module 13 mit integrierter Wechselfeld-Anlage 32 verwendet werden. Dabei können die Filtrations-Module 13 mit integrierter elektrischer Wechselfeld-Anlage 32 zusätzlich zu der im Kreislauf 14 angeordneten Düse 27 eingesetzt werden, wie im Ausführungsbeispiel nach Fig. 2 gezeigt.

Anstelle der rohrförmigen Filtrations-Module 13 gemäss Fig. 5 können auch andere Module, wie z.B. Platten-Module verwendet werden, bei denen die innere Elektrode zwischen den Membranfilter-Platten angeordnet ist und die zweite Elektrode durch das Gehäuse, das nach aussen isoliert ist, gebildet wird.

Ein weiteres Ausführungsbeispiel einer integrierten Einrichtung für den physikalischen Zellaufschluss ist in Fig. 6 aufgezeigt. Die im Kreislauf der Membranfiltrationseinrichtung angeordnete Umwälzpumpe 20 oder Zuführpumpe 15 weist am Umfang des rotierenden Schaufelrades 39 im Anschluss an die Schaufeln 40 einen Zahnkranz 41 mit Kanten 42 und Lücken 43 auf, durch die der Rohsaft aufgrund der Pumpwirkung der Schaufeln 40 hindurchgeführt wird. Die mit dem Schaufelrad 39 umlaufenden Kanten 42 wirken mit feststehenden Gegenkanten 44 eines Stators 45 zusammen, der mit dem Pumpengehäuse 46 fest verbunden ist. In dem relativ kleinen Spalt zwischen Zahnkranz 41 und Stator 45 entstehen sehr hohe Scher- und Reibkräfte, die auf den Rohsaft einwirken und den gewünschten Zellaufschluss verursachen.

Die Anwendung der Membranfiltrations-Anlage mit integriertem Zellaufschluss gemäss der Erfindung, insbesondere auch das Filtrations-Modul mit integrierter elektrischer Wechselfeld-Anlage und die Umwälzpumpe mit integrierter Zellaufschluss-Einrichtung ist nicht auf das erfindungsgemässe Verfahren beschränkt. Diese Einrichtungen können mit Vorteil überall dort eingesetzt werden, wo ein physikalischer Zellaufschluss mit anschliessender Filtration durchgeführt werden soll, beispielsweise auch auf dem Gebiet der Bio-Technologie.

**Patentansprüche**

1. Verfahren zur Behandlung von Früchten und Gemüsen, insbesondere zur Saftgewinnung, mit Einrichtungen zum Aufbereiten des Rohmaterials durch Zerkleinerung, Zellaufschluss und Filtration, **dadurch gekennzeich-net,** dass das vornehmlich aus ganzen Früchten bestehende Rohmaterial zuerst zerkleinert und von Stielen, Kernen und Schalenteilen etc. getrennt wird, anschliessend ganz oder teilweise durch physikalischen Zellaufschluss verflüssigt und der Rohsaft darauffolgend oder gleichzeitig mit dem Zellaufschluss durch Membranfiltration geklärt wird.

2. Verfahren nach Anspruch 1, dadurch gekennzeichnet, dass die Klärung des Rohsaftes durch Ultra- oder Mikrofiltration erfolgt.

3. Verfahren nach einem der Ansprüche 1 und 2, dadurch gekennzeichnet, dass die Filtration in zwei Stufen erfolgt, wobei die erste Stufe als Hochdruckstufe und die zweite Stufe als Normaldruckstufe ausgebildet sind.

4. Verfahren nach Anspruch 3, dadurch gekennzeichnet, dass die erste Filtrationsstufe mittels einer tangential angeströmten Grob- oder Mikrofiltrationseinrichtung und die zweite Filtrationsstufe mittels Ultra- oder Mikrofiltrationseinrichtung erfolgt.

5. Verfahren nach einem der Ansprüche 1 bis 4, dadurch gekennzeichnet, dass das Rohmaterial aus ganzen Früchten besteht.

6. Anlage zur Durchführung des Verfahrens nach einem der Ansprüche 1 bis 5, dadurch gekennzeichnet, dass sie aus einer Zerkleinerungseinrichtung (1) zum Zerkleinern des Rohmaterials, einer der Zerkleinerungseinrichtung (1) nachgeschalteten oder integrierten Siebeinrichtung (2) zum Abtrennen der Stiele, Kerne und Schalenteile etc., einer anschliessenden Einrichtung (8) für den physikalischen Zellaufschluss und einer Membran-Filtrationseinrichtung (9) besteht.

7. Anlage nach Ansprüche 6, dadurch gekennzeichnet, dass die Filtrationseinrichtung (9) aus einer Ultra- oder Mikrofiltrationseinrichtung besteht.

8. Anlage nach Anspruch 6 oder 7, dadurch gekennzeichnet, dass der Siebeinrichtung (2) eine Recycling-Presse (5) zur Entsaftung der abgetrennten Stiele, Kerne und Schalenteile etc. zugeordnet ist.

9. Anlage nach einem der Ansprüche 6 bis 8, dadurch gekennzeichnet, dass das von der Filtrationseinrichtung (9) anfallende Retentat der Recycling-Presse (5) zugeführt wird.

10. Anlage nach Anspruch 9, dadurch gekennzeichnet, dass zwischen der Filtrationseinrichtung (9) und der Recycling-Presse (5) eine Vorbehandlungsstufe (12) angeordnet ist, in der das Retentat mit Schönungsmitteln und Enzymen behandelt wird, bevor es der Recycling-Presse (5) zugeführt wird.

11. Anlage nach einem der Ansprüche 6 bis 10, dadurch gekennzeichnet, dass der durch die Recycling-Presse (5) gewonnene Rohsaft über eine Zuführleitung (6) unmittelbar nach der Siebeinrichtung (2) wieder in den Prozessablauf zurückgeführt wird.

12. Anlage nach einem der Ansprüche 6 bis 11, dadurch gekennzeichnet, dass zwischen der Siebeinrichtung (2) und der Einrichtung (8) für den physikalischen Zellaufschluss eine Behandlungsstufe (7) mit pektolytischen Enzymen vorgesehen ist.

13. Anlage nach Anspruch 12, dadurch gekennzeichnet, dass die Behandlungsstufe (7) nach der Einrichtung (8) vorgesehen ist.

14. Anlage nach einem der Ansprüche 6 bis 13, dadurch gekennzeichnet, dass wahlweise ein Hochdruck-Homogenisator und/oder eine Kolloidmühle oder eine elektrische Wechselfeld-Anlage (32) für den physikalischen Zellaufschluss vorgesehen ist.

15. Anlage nach Anspruch 14, dadurch gekennzeichnet, dass die mit einer Prallplatte versehene Düse (27) des Druck-Homogenisators aus einer oder mehreren, hintereinander angeordneten Bearbeitungskammern (28) besteht, denen ein Difusor (31) nachgeschaltet ist.

16. Anlage nach einem der Ansprüche 14 und 15, dadurch gekennzeichnet, dass die elektrische Wechselfeld-Anlage der mechanisch arbeitenden Zellaufschluss-Einrichtung vorgeschaltet ist.

17. Anlage nach einem der Ansprüche 6 bis 16, dadurch gekennzeichnet, dass die Einrichtung (8) für den physikalischen Zellaufschluss in die Filtrationseinrichtung (9) integriert ist.

18. Anlage nach Anspruch 17, dadurch gekennzeichnet, dass die integrierte Einrichtung (8) in einem der vorhandenen Kreisläufe der Filtrationseinrichtung (9) in Serie oder parallel dazu angeordnet ist.

19. Anlage nach Anspruch 6, dadurch gekennzeichnet, dass die Einrichtung (8) im Kreislauf (14) einer batchweisen oder halbkontinuierlich arbeitenden Membranfiltrationseinrichtung angeordnet ist, die aus einem Tank (16), einer Zuführleitung (17) und einer Rückleitung (18) besteht.

20. Anlage nach Anspruch 18 oder 19, dadurch gekennzeichnet, dass die Einrichtung (8) im Kreislauf (14) nach einer Zuführpumpe (15) angeordnet ist.

21. Anlage nach einem der Ansprüche 17 bis 20, dadurch gekennzeichnet, dass die Einrichtung (8) im Umwälzkreislauf (19) der Filtrationseinrichtung (9) vor oder nach einer Umwälzpumpe (20) angeordnet ist.

22. Anlage nach Anspruch 18, dadurch gekennzeichnet, dass die Einrichtung (8) für den physikalischen Zellaufschluss mindestens in der ersten Stufe (21) einer vollkontinuierlich und mehrstufig arbeitenden Membranfiltrationseinrichtung parallel in den Kreislauf (24) geschaltet ist.

23. Anlage nach einem der Ansprüche 17 bis 22, dadurch gekennzeichnet, dass der/den Filtrationseinrichtungen eine Vorrichtung (16) zur Vorbehandlung des Aufschlusses der Maische vorgeschaltet ist.

24. Anlage nach Anspruch 23, dadurch gekennzeichnet, dass wenigstens ein Teilstrom des Retentats aus einer oder mehreren Filtrationsstufen einer kontinuierlichen Filtrationsanlage über eine Rückführleitung (18) in die Vorbehandlungsvorrichtung (16) geleitet wird.

25. Anlage nach Anspruch 17, dadurch gekennzeichnet, dass die elektrische Wechselfeld-Anlage (32) in ein Filtrations-Modul (13) der Filtrationseinrichtung (9) integriert ist.

26. Anlage nach Anspruch 25, dadurch gekennzeichnet, dass die eine Elektrode der elektischen Wechselfeld-Anlage (32) auf der Retentatseite und die zweite Elektrode oder weitere Elektroden mit einem gemeinsamen elektrischen Anschluss auf der Permeatseite des Filtrations-Moduls (13) angeordnet sind.

27. Anlage nach Anspruch 25 oder 26, dadurch gekennzeichnet, dass das Filtrations-Modul (13) als Rohr-Modul oder Platten-Modul ausgeführt ist.

**28.** Anlage nach Anspruch 27, dadurch gekennzeichnet, dass im Membranfilterrohr (34) des als Rohr-Modul ausgebildeten Filtrations-Moduls (13) eine innere Elektrode (33) angeordnet ist und die zweite Elektrode (36) durch das nach aussen isolierte, äussere Hüllrohr (35) des Filtrations-Moduls (13) gebildet wird.

**29.** Anlage nach einem der Ansprüche 17 bis 28, dadurch gekennzeichnet, dass die Einrichtung für den physikalischen Zellaufschluss in die Umwälzpumpe (20) und/oder Zuführpumpe (15) einer Membranfiltrationseinrichtung integriert ist.

**30.** Anlage nach Anspruch 29, dadurch gekennzeichnet, dass am Umfang eines rotierenden Schaufelrades (39) der Umwälzpumpe (20) und/oder Zuführpumpe (15) anschliessend an die Schaufeln (40) ein Zahnkranz (41) mit Kanten (42) und Lücken (43) angeordnet ist, die mit feststehenden Gegenkanten (44) eines mit dem Pumpengehäuse (46) fest verbundenen Stators (45) zusammenwirken.

**Claims**

**1.** Process for treating fruit and vegetables, in particular for juice extraction, with devices for processing the raw material by crushing, cell disintegration and filtration, characterised in that the raw material consisting mainly of whole fruits is first crushed and freed of stalks, pips and skin fragments, etc. and is then completely or partially liquefied by physical cell disintegration and the raw juice is clarified by membrane filtration subsequent to or simultaneously with the cell disintegration.

**2.** Process according to claim 1, characterised in that the clarification of the raw juice is effected by ultra- or microfiltration.

**3.** Process according to one of claims 1 and 2, characterised in that the filtration is effected in two stages, the first stage being a high-pressure stage and the second stage being a normal-pressure stage.

**4.** Process according to claim 3, characterised in that the first filtration stage is effected by means of a tangentially traversed coarse or microfiltration device and the second filtration stage is effected by means of an ultra- or microfiltration device.

**5.** Process according to one of claims 1 to 4, characterised in that the raw material consists of whole fruits.

**6.** System for implementing the process according to one of claims 1 to 5, characterised in that it consists of a crushing device (1) for crushing the raw material, a sieving device (2) following or integrated with the crushing device (1) for separating the stalks, pips and skin fragments, etc., a subsequent device (8) for the physical cell disintegration and a membrane filtration device (9).

**7.** System according to claim 6, characterised in that the filtration device (9) consists of an ultra- or microfiltration device.

**8.** System according to claim 6 or claim 7, characterised in that a recycling press (5) for extracting the juice from the separated stalks, pips and skin fragments, etc. is associated with the sieving device (2).

**9.** System according to one of claims 6 to 8, characterised in that the residue from the filtration device (9) is advanced to the recycling press (5).

**10.** System according to claim 9, characterised in that a pretreatment stage (12) is arranged between the filtration device (9) and the recycling press (5), in which the residue is treated with fining agents and enzymes before it is advanced to the recycling press (5).

**11.** System according to one of claims 6 to 10, characterised in that the raw juice obtained by the recycling press (5) is returned to the processing cycle via a supply line (6) directly following the sieving device (2).

**12.** System according to one of claims 6 to 11, characterised in that a stage (7) for treatment with pectolytic enzymes is provided between the sieving device (2) and the device (8) for the physical cell disintegration.

**13.** System according to claim 12, characterised in that the treatment stage (7) is provided after the device (8).

**14.** System according to claims 6 to 13, characterised in that either a high-pressure homogeniser and/or a colloid mill or an electrical alternating field device (32) is provided for the physical cell disintegration.

**15.** System according to claim 14, characterised in that the nozzle (27) of the pressure homogeniser provided with a baffle plate consists of one or more processing chambers (28) arranged one behind the other, followed by a diffuser (31).

16. System according to one of claims 14 and 15, characterised in that the electrical alternating field system precedes the mechanically operating cell disintegration device.

17. System according to one of claims 6 to 16, characterised in that the device (8) for the physical cell disintegration is integrated with the filtration device (9).

18. System according to claim 17, characterised in that the integrated device (8) is arranged in series or in parallel in one of the circulation systems of the filtration device (9).

19. System according to claim 6, characterised in that the device (8) is arranged in the circulation system (14) of a batchwise or semi-continuously operating membrane filtration device consisting of a tank (16), a supply line (17) and a return line (18).

20. System according to claim 18 or claim 19, characterised in that the device (8) is arranged in the circulation system (14) after a supply pump (15).

21. System according to one of claims 17 to 20, characterised in that the device (8) is arranged in the circulation system (19) of the filtration device (9) before or after a circulating pump (20).

22. System according to claim 18, characterised in that the device (8) for the physical cell disintegration is connected in parallel in the circulation system (24) at least in the first stage (21) of a fully continuously and multi-stage operating membrane filtration device.

23. System according to one of claims 17 to 22, characterised in that a device (16) for the pretreatment of the disintegrated pulp precedes the filtration device(s).

24. System according to claim 23, characterised in that at least part of the residue from one or more filtration stages of a continuous filtration system is fed via a return line (18) to the pretreatment device (16).

25. System according to claim 17, characterised in that the electrical alternating field device (32) is integrated with a filtration module (13) of the filtration device (9).

26. System according to claim 25, characterised in that one electrode of the electrical alternating field device (32) is arranged on the residue side and the second electrode or other electrodes are arranged together with a common electrical terminal on the permeate side of the filtration module (13).

27. System according to claim 25 or claim 26, characterised in that the filtration module (13) is a tube module or a plate module.

28. System according to claim 27, characterised in that an inner electrode (33) is arranged in the membrane filter tube (34) of the filtration module (13) in the form of a tube module and the second electrode (36) is formed by the outer tubular sleeve (35) of the filtration module (13) insulated towards the outside.

29. System according to one of claims 17 to 28, characterised in that the device for the physical cell disintegration is integrated with the circulating pump (20) and/or supply pump (15) of a membrane filtration device.

30. System according to claim 29, characterised in that a toothed ring (41) with edges (42) and gaps (43) is arranged on the circumference of a rotating paddle wheel (39) of the circulating pump (20) and/or supply pump (15) adjacent to the paddles (40), said edges and gaps cooperating with fixed opposing edges (44) of a stator (45) rigidly connected to the pump housing (46).

**Revendications**

1. Procédé pour traiter des fruits et des légumes, en particulier pour l'extraction du jus, au moyen de dispositifs pour préparer la matière brute par fractionnement, désagrégation de cellules et filtration, caractérisé en ce que l'on fractionne d'abord la matière brute, constituée principalement de fruits entiers, et on la sépare de queues, noyaux, morceaux de peau, et ainsi de suite, on la liquéfie après cela entièrement ou partiellement par désintégration physique de cellules et on clarifie le jus brut ensuite ou en même temps que la désintégration cellulaire par filtration à membrane.

2. Procédé selon la revendication 1, caractérisé en ce que la clarification du jus brut s'effectue par ultrafiltration ou par microfiltration.

3. Procédé selon la revendication 1 ou 2, caractérisé en ce que la filtration s'effectue en deux étapes dont la première forme une étape à haute pression et la seconde forme une étape à pression normale.

4. Procédé selon la revendication 3, caractérisé en ce que l'on effectue la première étape de filtration au moyen d'un dispositif de filtration grossière ou de microfiltration à écoulement d'arrivée tangentiel et l'on effectue la seconde étape de filtration au moyen d'un dispositif d'ultrafiltration ou de microfiltration.

5. Procédé selon une des revendications 1 à 4, caractérisé en ce que la matière brute est constituée de fruits entiers.

6. Installation pour la mise en oeuvre du procédé selon une des revendications 1 à 5, caractérisée en ce qu'elle est composée d'un dispositif de fractionnement (1) pour fractionner la matière brute, d'un dispositif de tamisage (2) prévu à la suite du dispositif de fractionnement (1) ou intégré dans celui-ci, pour séparer les queues, noyaux, morceaux de peau, et ainsi de suite, d'un dispositif (8) qui s'y raccorde pour la désintégration physique de cellules et d'un dispositif de filtration à membrane (9).

7. Installation selon la revendication 6, caractérisée en ce que le dispositif de filtration (9) est formé d'un dispositif d'ultrafiltration ou de microfiltration.

8. Installation selon la revendication 6 ou 7, caractérisée en ce qu'une presse de recyclage (5), servant à extraire le jus des queues, noyaux, morceaux de peau et ainsi de suite, est coordonnée au dispositif de tamisage (2).

9. Installation selon une des revendications 6 à 8, caractérisée en ce que le retentat, produit par le dispositif de filtration (9) est envoyé à la presse de recyclage (5).

10. Installation selon la revendication 9, caractérisée en ce qu'un étage de traitement préalable (12) est prévu entre le dispositif de filtration (9) et la presse de recyclage (5), dans lequel le rétentat est traité par des agents de clarification et des enzymes avant qu'il ne soit envoyé à la presse de recyclage (5).

11. Installation selon une des revendications 6 à 10, caractérisée en ce que le jus brut extrait par la presse de recyclage (5), est renvoyé à travers une conduite de retour (6) dans le cours du processus en un point situé directement à la suite du dispositif de tamisage (2).

12. Installation selon une des revendications 6 à 11, caractérisée en ce qu'un étage de traitement (7) par des enzymes pectolytiques est prévu entre le dispositif de tamisage (2) et le dispositif (8) pour la désintégration physique de cellules.

13. Installation selon la revendication 12, caractérisée en ce que l'étage de traitement (7) est prévu après le dispositif de désintégration (8).

14. Installation selon une des revendications 6 à 13, caractérisée par la prévision, au choix, d'un homogénéisateur à haute pression et/ou d'un moulin à colloïdes ou d'une installation à champ électrique alternant (32) pour la désintégration physique de cellules.

15. Installation selon la revendication 14, caractérisée en ce que la tuyère (27) de l'homogénéisateur à pression, tuyère qui est pourvue d'une plaque d'impact, est formée d'une ou de plusieurs chambres de traitement (28) disposées l'une à la suite de l'autre et qui est ou sont suivie(s) d'un diffuseur (31).

16. Installation selon la revendication 14 ou 15, caractérisée en ce que l'installation à champ électrique alternant précède le dispositif de désintégration de cellules, agissant mécaniquement.

17. Installation selon une des revendications 6 à 16, caractérisée en ce que le dispositif (8) pour la désintégration physique de cellules est intégré dans le dispositif de filtration (9).

18. Installation selon la revendication 17, caractérisée en ce que le dispositif intégré (8) est monté en série ou en parallèle avec l'un des circuits que comporte le dispositif de filtration (9).

19. Installation selon la revendication 6, caractérisée en ce que le dispositif (8) est monté dans le circuit (14) d'un dispositif de filtration à membrane fonctionnant par charges séparées ou en semi-continu et qui se compose d'une cuve (16), d'une conduite d'alimentation (17) et d'une conduite de retour (18).

20. Installation selon la revendication 18 ou 19, caractérisée en ce que le dispositif (8) est monté dans le circuit (14) à la suite d'une pompe alimentaire (15).

**21.** Installation selon une des revendications 17 à 20, caractérisée en ce que le dispositif (8) est monté dans le circuit de recyclage (19) du dispositif de filtration (9), an amont ou en aval d'une pompe de recyclage (20).

**22.** Installation selon la revendication 18, caractérisée en ce que le dispositif (8) pour la désintégration physique de cellules est monté au moins dans le premier étage (21) d'un dispositif de filtration à membrane à fonctionnement entièrement continu et à plusieurs étages, en parallèle avec le circuit (24) de ce dispositif de filtration.

**23.** Installation selon une des revendications 17 à 22, caractérisée en ce qu'un dispositif (16) pour un traitement préalable à la désintégration du moût précède le ou las dispositifs de filtration.

**24.** Installation salon la revendication 23, caractérisée en ce qu'au moins un courant partiel du rétentat d'un ou plusieurs étages de filtration d'une installation de filtration continue, est envoyé à travers une conduite de retour (18) dans le dispositif de traitement préalable (16).

**25.** Installation selon la revendication 17, caractérisée en ce que l'installation à champ électrique alternant (32) est intégrée dans un module de filtration (13) du dispositif de filtration (9).

**26.** Installation selon la revendication 25, caractérisée en ce que l'une des électrodes de l'installation à champ électrique alternant (32) est placée du côté du retentat et la deuxième électrode ou les autres électrodes, présentant une borne électrique commune, est ou sont disposée(s) du côté du perméat du module de filtration (13).

**27.** Installation selon la revendication 25 ou 26, caractérisée en ce que le module de filtration (13) est réalisé comme un module tubulaire ou un module à plaques.

**28.** Installation selon la revendication 27, caractérisée en ce qu'une électrode interne (33) est placée dans la tube de filtre à membrane (34) du module de filtration (13) réalisé comme un module tubulaire, et la deuxième électrode (36) est formée par le tube enveloppe externe (35), isolé vers l'extérieur, du module de filtration (13).

**29.** Installation selon une des revendications 17 à 28, caractérisée en ce que le dispositif pour la désintégration physique de cellules est intégré dans la pompe de recyclage (20) et/ou la pompe alimentaire (15) d'un dispositif de filtration à membrane.

**30.** Installation selon la revendication 29, caractérisée en ce qu'une couronne dentée (41), présentant des arêtes (42) et des intervalles (43), est placée à la périphérie d'une roue à aubes (39) tournante de la pompe de recyclage (20) et/ou de la pompe alimentaire (15), à la suite des aubes (40), couronne dont les arêtes et les intervalles coopèrent avec des arêtes antagonistes stationnaires (44) d'un stator (45) relié rigidement au carter (46) de la pompe.

Fig. 1

Fig. 2

Fig. 3

Fig. 4

Fig. 5

Fig. 6